# EUROPEAN PATENT APPLICATION

(11) **EP 3 761 290 A1**
(43) Date of publication of application: **06.01.2021**
(21) Application number: 18907775.3
(22) Date of filing: 28.02.2018
(51) Int. Cl.: G09B 9/08

(54) **TEACHING METHOD FOR UNMANNED AERIAL VEHICLE AND REMOTE CONTROLLER FOR UNMANNED AERIAL VEHICLE**

(71) Applicant: SZ DJI Technology Co., Ltd., Shenzhen, Guangdong 518057 (CN)
(72) Inventor: WANG, Xiaodan, Shenzhen, Guangdong 518057 (CN)
(74) Representative: Goddar, Heinz J.
(86) International application number: PCT/CN2018/077505
(87) International publication number: WO 2019/165588

(57) **Abstract**

The present disclosure provides a teaching method for an unmanned aerial vehicle (UAV) and a remote controller for the UAV. The teaching method for the UAV of the present disclosure includes obtaining teaching data that includes a standard trajectory of a stick and controlling a driving device to drive the stick to move according to the standard trajectory. The embodiments of the disclosure can enable a pilot to intuitively learn the control method of the UAV, thereby improving the efficiency of learning the UAV flight control.

## Description

### TECHNICAL FIELD

The present disclosure relates to an unmanned aerial vehicle (UAV), and in particular, to a teaching method for the UAV and a remote controller for the UAV.

### BACKGROUND

As one kind of UAV, a racing UAV is known to flight enthusiasts by its competitive features such as racing and traversing. It has the characteristics of small size and fast speed. Unlike traditional consumer-grade UAVs, the racing UAVs are often accompanied by a high technical bar. A pilot needs a long time of flight training to reach a high level and skillfully control the racing UAVs. The usual training method is for the pilot to watch the instructional video, and then manipulate the racing UAV to perform simulation training to achieve the same flight in the instructional video. However, in this training method, the pilot does not know how the remote controller is controlled in the instructional video to achieve various flight attitudes in the video, and can only keep experimenting by himself or herself, which not only increases the training difficulty to the pilot, but also brings greater risks to the flight.

In the above training method of the racing UAV, the pilot can only directly obtain the flight process of the demonstrating racing UAV, but cannot know how the pilot in the instructional video actually controls the remote controller to achieve various flight attitudes in the video. The pilot needs to understand by himself or herself according to the explanation, and then keep experimenting, which not only increases the training difficulty to the pilot, but also brings greater risks to the flight.

### SUMMARY

Embodiments of the present disclosure provide a teaching method for an unmanned aerial vehicle (UAV) and a remote controller for the UAV, so that a pilot can intuitively learn the control method of the UAV, thereby improving the efficiency of learning the UAV flight control.

In accordance with the disclosure, there is provided a teaching method for a UAV, which includes obtaining teaching data, wherein the teaching data includes a standard trajectory of a stick, and the stick is provided at a remote controller.

According to the standard trajectory, a driving device is controlled to drive the stick to move, wherein the driving device is connected to the stick to control the stick to move.

Referring to the method, in one embodiment of the method, the standard trajectory includes a standard operation state of the stick at various moments.

Referring to the method or the embodiments of the method, in another embodiment of the method, the standard operation state includes at least one of a standard stroke amount or a standard direction.

Referring to the method or any embodiment of the method, in another embodiment of the method, the controlling the driving device to drive the stick to move according to the standard trajectory includes controlling the stick through the driving device to move according to the standard operation state of the stick at various moments.

Referring to the method or any embodiment of the method, in another embodiment of the method, the remote controller further includes a force feedback device.

When the driving device drives the stick to move, the force feedback device can provide a feedback force.

Referring to the method or any embodiment of the method, in another embodiment of the method, the force feedback device is coupled between the stick and the driving device, and the driving device drives the stick to move through the force feedback device.

Referring to the method or any embodiment of the method, in another embodiment of the method, the force feedback device is coupled between the stick and a stick pivot portion. The driving device drives the stick pivot portion to rotate, and the stick pivot portion drives the stick to move through the force feedback device.

Referring to the method or any embodiment of the method, in another embodiment of the method, the force feedback device is a torsion spring device.

Referring to the method or any embodiment of the method, in another embodiment of the method, the force feedback device is a spring device.

Referring to the method or any embodiment of the method, in another embodiment of the method, the force feedback device is a magnetic device.

Referring to the method or any embodiment of the method, in another embodiment of the method, the force feedback device is a piece of elastic rod, and the elastic rod is made of an elastic material.

Referring to the method or any embodiment of the method, in another embodiment of the method, controlling the driving device to drive the stick to move according to the standard trajectory includes obtaining an actual operation state of the pilot's current operation of the stick, determining an operation offset according to the standard operation state and the actual operation state at the current moment, feeding back the operation offset through the force feedback device.

Referring to the method or any embodiment of the method, in another embodiment of the method, feeding back the operation offset through the force feedback device includes feeding back the operation offset through the force feedback device when the operation offset is greater than a preset threshold.

Referring to the method or any embodiment of the method, in another embodiment of the method, feeding back the operation offset through the force feedback device includes recording the operation offset when the operation offset is greater than a preset threshold.

Referring to the method or any embodiment of the method, in another embodiment of the method, the method further includes determining a pilot's operation score according to the operation offset.

Referring to the method or any embodiment of the method, in another embodiment of the method, the force feedback device is further coupled between the stick and the driving device. The method also includes obtaining an operational flight trajectory corresponding to the actual stick operation of the pilot at various moments, determining a flight trajectory difference between a standard flight trajectory and the operational flight trajectory at various moments, wherein the standard flight trajectory is the flight trajectory of the UAV corresponding to the standard trajectory of the stick, feeding back the flight trajectory difference through the force feedback device.

Referring to the method or any embodiment of the method, in another embodiment of the method, the method further includes determining a pilot's operation score according to the flight trajectory difference.

Referring to the method or any embodiment of the method, in another embodiment of the method, the UAV is a simulated UAV and the simulated UAV is displayed on a display device.

Referring to the method or any embodiment of the method, in another embodiment of the method, at least one of the operational flight trajectory or the standard flight trajectory is displayed on the display device.

Referring to the method or any embodiment of the method, in another embodiment of the method, the teaching data is generated by a coach controlling a teaching remote controller.

Referring to the method or any embodiment of the method, in another embodiment of the method, the teaching data is obtained by processing the recorded video with visual analysis, wherein the recorded video is a video of the actual operations of the coach controlling the teaching remote controller.

Referring to the method or any embodiment of the method, in another embodiment of the method, the visual analysis includes a three-dimensional modeling algorithm based on binocular stereo vision.

In accordance with an embodiment of the present disclosure, there is also provided a remote controller for a UAV, which includes a stick, a driving device and a processor. One end of the driving device is connected to the stick, and the other end of the driving device is connected to the processor.

The processor is configured to obtain teaching data, and the teaching data includes a standard trajectory of the stick.

The processor is also configured to control the driving device to drive the stick to move according to the standard trajectory.

Referring to the remote controller, in one embodiment of the remote controller, the standard trajectory includes a standard operation state of the stick at various moments.

Referring to the remote controller or any embodiments of the remote controller, in another embodiment of the remote controller, the standard operation state includes at least one of a standard stroke amount or a standard direction.

Referring to the remote controller or any embodiments of the remote controller, in another embodiment of the remote controller, the processor is configured to control the stick through the driving device to move according to the standard operation state of the stick at various moments.

Referring to the remote controller or any embodiments of the remote controller, in another embodiment of the remote controller, the remote controller further includes a force feedback device. When the driving device drives the stick to move, the force feedback device can provide a feedback force.

Referring to the remote controller or any embodiments of the remote controller, in another embodiment of the remote controller, the force feedback device is coupled between the stick and the driving device, and the driving device drives the stick to move through the force feedback device.

Referring to the remote controller or any embodiments of the remote controller, in another embodiment of the remote controller, the force feedback device is coupled between the stick and a stick pivot portion. The driving device drives the stick pivot portion to rotate, and the stick pivot portion drives the stick to move through the force feedback device.

Referring to the remote controller or any embodiments of the remote controller, in another embodiment of the remote controller, the force feedback device is a torsion spring device.

Referring to the remote controller or any embodiments of the remote controller, in another embodiment of the remote controller, the force feedback device is a spring device.

Referring to the remote controller or any embodiments of the remote controller, in another embodiment of the remote controller, the force feedback device is a magnetic device.

Referring to the remote controller or any embodiments of the remote controller, in another embodiment of the remote controller, the force feedback device is a piece of elastic rod, and the elastic rod is made of an elastic material.

Referring to the remote controller or any embodiments of the remote controller, in another embodiment of the remote controller, the processor is configured to obtain an actual operation state of the current stick operation of the pilot, determine an operation offset according to the standard operation state and the actual operation state at the current moment, and feed back the operation offset through the force feedback device.

Referring to the remote controller or any embodiments of the remote controller, in another embodiment of the remote controller, the processor is configured to feed back the operation offset through the force feedback device when the operation offset is greater than a preset threshold.

Referring to the remote controller or any embodiments of the remote controller, in another embodiment of the remote controller, the processor is configured to record the operation offset when the operation offset is greater than a preset threshold.

Referring to the remote controller or any embodiments of the remote controller, in another embodiment of the remote controller, the processor is further configured to determine a pilot's operation score according to the operation offset.

Referring to the remote controller or any embodiments of the remote controller, in another embodiment of the remote controller, the force feedback device is further coupled between the stick and the driving device. The processor is configured to obtain an operational flight trajectory corresponding to the actual stick operation of the pilot at various moments, determine a flight trajectory difference between a standard flight trajectory and the operational flight trajectory at various moments, wherein the standard flight trajectory is the flight trajectory of the UAV corresponding to the standard trajectory of the stick, feed back the flight trajectory difference through the force feedback device.

Referring to the remote controller or any embodiments of the remote controller, in another embodiment of the remote controller, the processor is further configured to determine a pilot's operation score according to the flight trajectory difference.

Referring to the remote controller or any embodiments of the remote controller, in another embodiment of the remote controller, the UAV is a simulated UAV and the simulated UAV is displayed on a display device.

Referring to the remote controller or any embodiments of the remote controller, in another embodiment of the remote controller, at least one of the operational flight trajectory or the standard flight trajectory is displayed on the display device.

Referring to the remote controller or any embodiments of the remote controller, in another embodiment of the remote controller, the teaching data is generated by a coach controlling a teaching remote controller.

Referring to the remote controller or any embodiments of the remote controller, in another embodiment of the remote controller, the teaching data is obtained by processing a recorded video with visual analysis, wherein the recorded video is a video of the actual operations of the coach controlling the teaching remote controller.

Referring to the remote controller or any embodiments of the remote controller, in another embodiment of the remote controller, the visual analysis includes a three-dimensional modeling algorithm based on binocular stereo vision.

In accordance with embodiments of the disclosure, there is also provided a computer storage medium on which a computer program or instruction is stored. When the computer program or instruction is executed by a processor or a computer, the teaching method for the UAV as described above is implemented.

The teaching method for the UAV and the remote controller for the UAV according to the embodiments of the present disclosure obtain teaching data. The teaching data includes the standard trajectory of the stick, and the driving device is controlled to drive the stick to move according to the standard trajectory. To learn the operation, the pilot can use the stick movement to learn the specific operation process of the remote controller on the UAV. Compared with the method in which the pilot simulates the operation by watching instructional videos of operating the UAV, the teaching method of this disclosure can enable the pilot to intuitively learn the control method of the UAV, thereby improving the efficiency of learning the UAV flight control.

### BRIEF DESCRIPTION OF THE DRAWINGS

To more clearly illustrate the technical solution of the present disclosure or the existing technologies, the accompanying drawings used in the description of the disclosed embodiments or the existing technologies are briefly described below. The drawings described below are merely some embodiments of the present disclosure. Other drawings may be derived from such drawings by a person with ordinary skill in the art without creative efforts.
FIG. 1 is a schematic diagram of an application scenario of the present disclosure.
FIG. 2 is a flowchart of a teaching method for an unmanned aerial vehicle (UAV) according to the present disclosure.
FIG. 3A is a flowchart of another teaching method for a UAV according to the present disclosure.
FIG. 3B is a schematic diagram showing the stroke amount and direction of a stick of a remote controller.
FIG. 3C is a schematic diagram of an internal structure of the remote controller.
FIG. 4 is a flowchart of another teaching method for a UAV according to the present disclosure.
FIG. 5A is a schematic structural diagram of a force feedback device of the present disclosure.
FIG. 5B is a schematic structural diagram of another force feedback device of the present disclosure.
FIG. 5C is a schematic structural diagram of another force feedback device of the present disclosure.
FIG. 6 is a flowchart of another teaching method for a UAV according to the present disclosure.
FIG. 7 is a schematic structural diagram of a remote controller for a UAV according to the present disclosure.
FIG. 8 is a schematic structural diagram of another remote controller for a UAV according to the present disclosure.
FIG. 9 is a schematic structural diagram of a chip of the present disclosure.

### DETAILED DESCRIPTION OF THE EMBODIMENTS

To make the objectives, technical solutions, and advantages of embodiments of the disclosure clearer, the technical solutions in the example embodiments of the present disclosure will be described clearly and completely with reference to the accompanying drawings. The described embodiments are only some of the embodiments of the present disclosure, rather than all the embodiments. Based on the embodiments of the present disclosure, all other embodiments obtained by a person of ordinary skill in the art without creative efforts shall fall within the scope of the present disclosure.

The "and/or" referred to in this disclosure describes the association relationship of the related objects, indicating that there can be three relationships. For example, A and/or B, can mean that A exists alone, A and B both exist, and B exists alone. The character "/" generally indicates that the related objects have an "or" relationship.

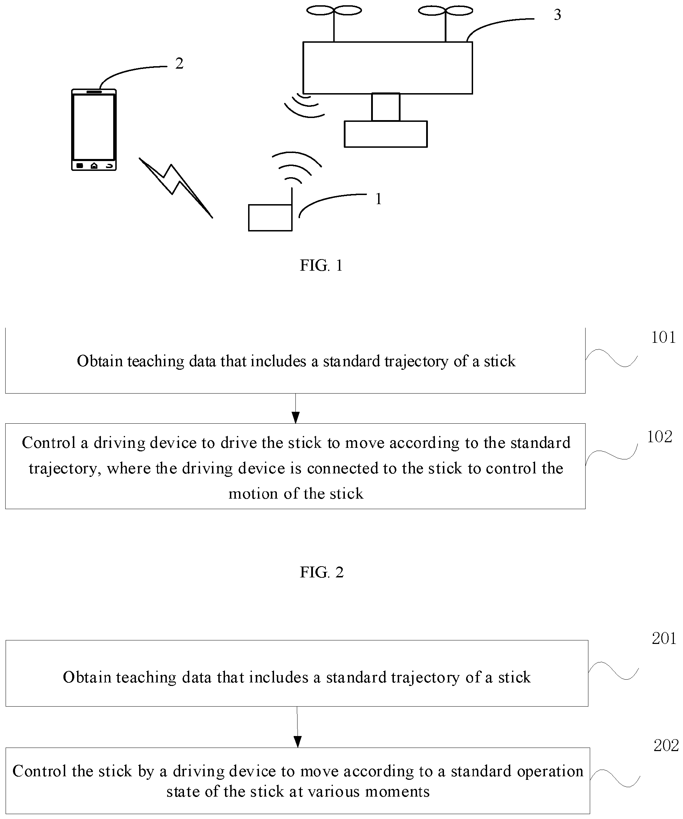

FIG. 1 is a schematic diagram of an application scenario of the present disclosure. As shown in FIG. 1, the application scenario includes a remote controller 1 and an external device 2. The remote controller 1 may be a remote controller for controlling an unmanned aerial vehicle (UAV), such as a remote controller for controlling a racing UAV, a remote controller for controlling a plant protection UAV, and etc. The external device 2 may be a device that provides voice and/or other business data connection to the user, a handheld device with wireless connection function, or other processing devices connected to a wireless modem. A wireless terminal can communicate with one or more core networks via a radio access network (RAN). The wireless terminal can be a mobile terminal, such as a mobile phone (or "cellular" phone) and a computer with a mobile terminal, such as a portable, pocket-sized, handheld, computer built-in or vehicle-mounted mobile device that exchanges language and/or data with the RAN. For example, they can also be personal communication service (PCS) phones, cordless phones, session initiation protocol (SIP) phones, wireless local loop (WLL) stations, personal digital assistant (PDA) and other devices. A wireless terminal can also be referred to as a system, a subscriber unit, a subscriber station, a mobile station, a remote station, a remote terminal, an access terminal, a user terminal, a user agent, a user equipment, which is not limited here.

The external device 2 may also be a wired terminal, such as a personal computer (PC).

As shown in FIG. 1, the external device 2 and the remote controller 1 are set separately, which may also be set in other ways. For example, the external device 2 may be set at the remote controller 1. FIG. 1 is only a schematic illustration, which is not limited in the present disclosure.

The remote controller 1 is provided with a stick, and the pilot controls the movement of the stick to realize the flight control of the UAV communicatively connected with the remote controller 1. The pilot needs to learn how to control the remote controller to realize the flight control of the UAV. A teaching method for a UAV is provided according to an embodiment of the present disclosure. An external device 2 or a remote controller 1 obtains teaching data. The teaching data includes a standard trajectory of the stick. The external device 2 or the remote controller 1 controls a driving device of the remote controller 1 according to the standard trajectory to drive the stick to move. The driving device is connected to the stick for controlling the stick movement. Therefore, the pilot can perceive the standard control process in real time, and the efficiency of learning the flight control is improved.

In some embodiments, FIG. 1 may further include a UAV 3 that is communicatively connected to the remote controller 1. The remote controller 1 can control the flight attitude, flight speed, flight trajectory, etc. of the UAV 3.

In the following embodiments, the teaching method for the UAV of the present disclosure is explained specifically.

FIG. 2 is a flowchart of a teaching method for a UAV according to the present disclosure. As shown in FIG. 2, the execution subject of this embodiment may be a processor. The processor may be a processor installed in the remote controller 1 or a processor installed in the external device 2.

At 101, teaching data is obtained, and the teaching data includes a standard trajectory of the stick.

The standard trajectory of the stick may include the standard stroke amount and the standard direction of the stick. The standard includes standard trajectory, standard stroke amount or standard direction, which refers to the trajectory, stroke amount or direction generated by a coach operating the stick of the remote controller in advance (for example, the coach operates the stick of the remote controller to control the flight according to a specific flight mode such as "brushing" mode). The stick is arranged at the remote controller. The teaching data is generated by a coach controlling the teaching remote controller, that is, the teaching data includes the standard trajectory of the stick. The UAV is controlled by the standard trajectory of the stick, so that the UAV can complete the corresponding flight attitude, flight speed, flight trajectory, etc.

The teaching data can be downloaded from a server or can be stored locally.

In any embodiment, the teaching data is generated by the coach controlling the teaching remote controller.

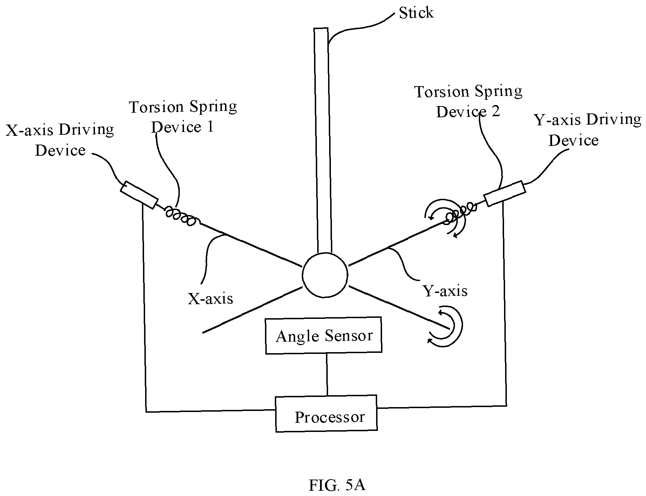

In a specific embodiment, the standard trajectory is recorded when the coach controls the teaching remote controller. For example, an angle sensor of the remote controller shown in any of FIGs. 5A-C can be used to directly record the stick's trajectory.

In another embodiment, the teaching data is obtained by a visual method. The teaching data is obtained by processing the recorded video using visual analysis. The recorded video is a video of the actual operations of the coach controlling the teaching remote controller.

Specifically, during the shooting of the teaching video, the process of the coach controlling the remote controller is filmed, that is, the control of the stick by the coach in the entire teaching process is obtained directly in the form of video. Then, the video is processed with visual analysis to obtain the trajectory of the stick at various moments. Similarly, the output of the visual analysis result can still be the stroke amount and direction in the recorded file of the remote controller, or the rotational displacement of the X axis and the rotational displacement of the Y axis.

Specifically, in the visual analysis process, a three-dimensional modeling algorithm based on binocular stereo vision may be used to perform image analysis and modeling on the part of the stick of the remote controller or the entire remote controller to obtain the axis position of the stick and the position of the remote controller surface at various moments, which can be used to calculate the stroke amount and direction of the stick at various moments to generate teaching data.

For the specific visual analysis, it is also possible to model the hands of the coach through a three-dimensional modeling algorithm based on binocular stereo vision. For controlling the remote controller of the UAV, there are usually typical control gestures, such as using the thumb and index finger to pinch the top of the stick for control. Therefore, the hands of the coach can be modeled to obtain the specific position of the stick at various moments.

Specifically, when modeling the coach's hands, the image pose estimation based on the part affinity field (PAF) can be used to perform vector estimation for different parts of the fingers, and the visual modeling of the two hands can be determined by the positional relationship of the finger joints. After the image modeling and analysis, the specific position of each finger at various moments can be obtained, and then combining with the preset coach's operating posture, the position of the stick at various moments can be obtained. Therefore, the teaching data can be obtained with analysis.

In some embodiments, in order to obtain the specific position of the coach's hand at various moments, corresponding sensors can also be worn on coach's fingers. The principle is similar to that of wearing a smart bracelet on the wrist to obtain the movement at the wrist.

At 102, a driving device is controlled to drive the stick to move according to the standard trajectory, and the driving device is connected to the stick to control the stick to move.

Specifically, the remote controller of the present disclosure is provided with a driving device connected to the stick. The driving device is used to output corresponding torque to drive the stick. The processor controls the driving device to drive the stick to move according to the standard trajectory. The pilot who learns the operation control can learn the specific operation process of the remote controller on the UAV through the stick movement.

In one embodiment, the processor of the external device obtains the teaching data, generates a control command according to the standard trajectory included in the teaching data, and sends the control command to the remote controller. The remote controller 's microcontroller unit (MCU) controls the driving device to drive the stick to move according to the control command. In this embodiment, the remote controller does not need a processor with higher processing capability since the teaching data is processed by the external device and sent to the remote controller.

In another embodiment, the remote controller is provided with a processor with higher processing capability. The processor of the remote controller can obtain teaching data, and the processor of the remote controller controls the driving device to drive the stick to move according to the standard trajectory.

While controlling the driving device to drive the stick to move according to the standard trajectory, the external device can play an instructional video synchronously. The instructional video may include the flight attitude and flight trajectory of the UAV. The flight attitude of the UAV is the flight attitude of a UAV controlled by the coach through the corresponding teaching remote controller. While learning the operation control of the UAV, the pilot can watch the instructional video and perceive the specific control method of the remote controller corresponding to different flight attitudes through the above processing steps, so that the pilot can effectively learn the flight control of the UAV by the remote controller.

Text, audio, picture, or a combination thereof can be used instead of the instructional video.

In some embodiments, an instructional mode of the remote controller can also be set. In the instructional mode, the driving device can be controlled to drive the stick to move according to the standard trajectory through the above method, and the UAV can be controlled to move according to the standard trajectory. While learning the operation control of the UAV, the pilot can watch the motion of the UAV, and perceive the specific operation method of the remote controller corresponding to different flight attitudes through the above processing steps, so that the pilot can effectively learn the flight control of the UAV by the remote controller.

In this embodiment, the teaching data is obtained, and the teaching data includes the standard trajectory of the stick. The driving device is controlled to drive the stick to move according to the standard trajectory. To learn the operation, the pilot can use the stick movement to learn the specific operation process of the remote controller on the UAV. Compared with the method in which the pilot simulates the operation by watching instructional videos of operating the UAV, the teaching method of this disclosure can enable the pilot to intuitively learn the control method of the UAV, thereby improving the efficiency of learning the UAV flight control.

Some specific embodiments are used to describe the technical solution of the method shown in FIG. 2 in detail.

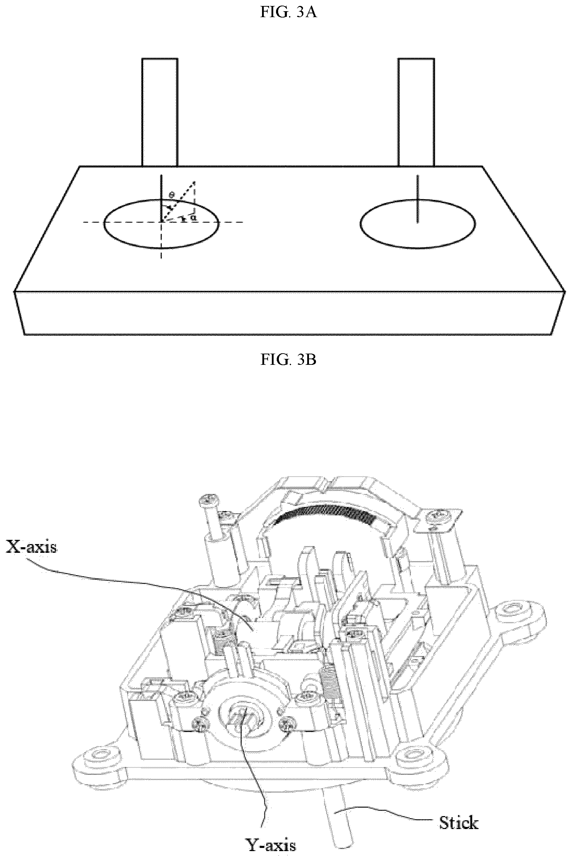

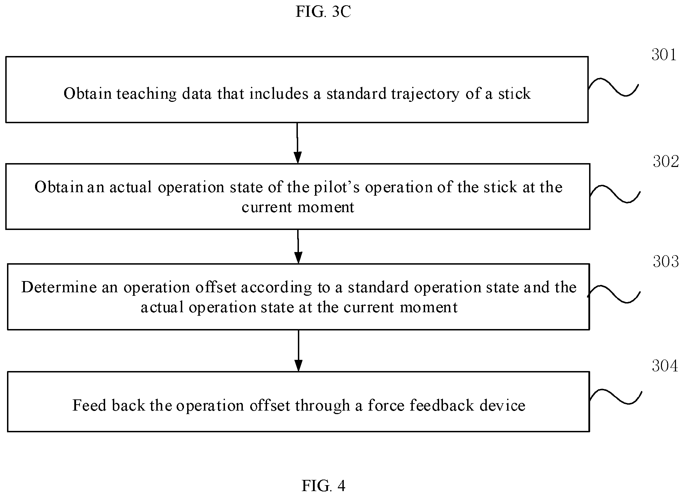

FIG. 3A is a flowchart of another teaching method for a UAV according to the present disclosure, FIG. 3B is a schematic diagram showing the stroke amount and direction of a stick of a remote controller, and FIG. 3C is a schematic diagram of an internal structure of the remote controller. During teaching, the stick to move of the remote controller in this embodiment is only controlled by a driving device. As shown in FIG. 3A, at 201, teaching data is obtained, and the teaching data includes a standard trajectory of the stick.

Process 101 in the embodiment shown in FIG. 2 can be referred to for the specific explanation of process 201, which is not repeated here.

Specifically, the standard trajectory includes a standard operation state of the stick at various moments.

In some embodiments, the standard operation state includes at least one of a standard stroke amount or a standard direction. For example, the standard trajectory includes the standard stroke amount and standard direction of the stick at various moments. The stroke amount is *θ* as shown in FIG. 3B and the direction is *α* as shown in FIG. 3B. The standard stroke amount specifically refers to the stroke amount when the remote controller is controlled by the coach, and the standard direction specifically refers to the direction when the remote controller is controlled by the coach. The remote controller usually includes a left stick and a right stick as shown in FIG. 3B. Correspondingly, the standard trajectory can include *θᵢ(t)* and *αᵢ(t)*, *i* = 1, 2, where *i* = 1 represents the left stick, *i* = 2 represents the right stick, and *t* represents time, that is, the standard trajectory can include the standard stroke amount and the standard direction of the left and right sticks at various moments.

In another embodiment, the standard operation state includes at least one of a rotational displacement of the X axis or a rotational displacement of the Y axis. For example, the standard trajectory includes the rotational displacement of the X axis and the rotational displacement of the Y axis of the stick at various moments. Specifically, as shown in FIG. 3C, the stick of the remote controller moves with the rotations of the X axis and Y axis, so that the stick rotates within an angular range of 360 degrees. The rotational displacement of the X axis and the rotational displacement of the Y axis at various moments can also determine the stroke amount and direction of the stick at various moments.

At 202, the stick is controlled by the driving device to move according to the standard operation state of the stick at various moments.

Specifically, a processor of the remote controller may control the stick through the driving device to move according to the standard stroke amount and/or standard direction at various moments. In other embodiments, a processor of an external device may control the stick to move according to the standard stroke amount and/or standard direction at various moments through the driving device.

The stick in this embodiment can move by itself in the above method, and the pilot can perceive the specific operation method of the remote controller corresponding to different flight attitudes through the movement of the stick, so that the pilot can effectively learn the flight control of the UAV.

In this embodiment, the teaching data is obtained, and the teaching data includes the standard trajectory of the stick. The stick is controlled by the driving device to move according to the standard operation state of the stick at various moments. To learn the operation, the pilot can use the stick movement to learn the specific operation process of the remote controller on the UAV. Compared with the method in which the pilot simulates the operation by watching instructional videos of operating the UAV, the teaching method of this disclosure can enable the pilot to intuitively learn the control method of the UAV, thereby improving the efficiency of learning the UAV flight control.

FIG. 4 is a flowchart of another teaching method for a UAV according to the present disclosure. As shown in FIG. 4, the difference between this embodiment and the embodiment shown in FIG. 3A is that an operation offset is determined according to a standard trajectory and an actual operation trajectory, and the operation offset is fed back through a force feedback device. The remote controller of this embodiment includes a stick and a driving device. The driving device is connected to the stick to control the stick to move. The remote controller is also provided with the force feedback device. When the driving device drives the stick to move, the force feedback device provides a feedback force.

At 301, teaching data is obtained and the teaching data includes a standard trajectory of the stick.

Process 101 in the embodiment shown in FIG. 2 can be referred to for the specific explanation of process 301, which is not repeated here.

At 302, an actual operation state of the pilot's operation of the stick at the current moment is obtained.

Specifically, unlike the embodiment shown in FIG. 4A, where the stick to move of the remote controller is only controlled by the driving device, in this embodiment, the stick to move is controlled by an actual operation of the pilot. That is, the pilot controls the stick and the remote controller obtains the actual operation state of the pilot's current operation of the stick. In an embodiment, the pilot can operate the remote controller according to the explanation of the instructional video while watching the instructional video through the external device, and the remote controller can obtain the actual operation state of the pilot's operation of the stick.

At 303, an operation offset is determined according to the standard operation state and the actual operation state at the current moment.

Specifically, the remote controller may determine the operation offset according to the current standard operation state and the actual operation state. That is, a difference between the actual operation state of the pilot's operation of the stick and the standard operation state is calculated, and the operation offset is fed back through 304, that is, an error level of the pilot's operation is fed back.

At 304, the operation offset is fed back through the force feedback device.

Specifically, in one embodiment, the force feedback device is coupled between the stick and the driving device, and the driving device drives the stick to move through the force feedback device. In another embodiment, the force feedback device is coupled between the stick and a stick pivot portion. The driving device drives the stick pivot portion to rotate, and the stick pivot portion drives the stick to move through the force feedback device.

The force feedback device can prevent the pilot from getting the stick stuck due to excessive force when operating the stick of the remote controller. The operation offset can be used to feed back the error level of the operation to the pilot via the force feedback device in real time. In one embodiment, the direction of the feedback force is used to feed the error level of the direction control of the stick back to the pilot, and the magnitude of the feedback force is used to feed the error level of stroke amount control of the stick back to the pilot.

In some embodiments, the operation state may include at least one of an operation stroke amount or an operation direction. The operation offset may include at least one of a stroke amount difference or a direction difference. For example, the standard stroke amount and the standard direction are *θ(t)* and *α(t)* respectively, and the operation stroke amount and the operation direction are *θ'(t)* and *α'(t)* respectively, then the stroke amount difference is *θ(t) - θ'(t),* and the direction difference is *α(t)* - *α'(t).*

In some embodiments, the operation state may include a rotational displacement of the X axis and a rotational displacement of the Y axis, and the operation offset may include a rotational displacement difference of the X axis and a rotational displacement difference of the Y axis, which can be flexibly set according to needs.

In some embodiments, at 304, when the operation offset is greater than a preset threshold, the operation offset is fed back through the force feedback device. In another embodiment, the operation offset is recorded when the operation offset is greater than a preset threshold. The preset threshold can be flexibly set according to needs. Therefore, the operation offset is only fed back when it is big, and the operation offset is not fed back when it is small.

In some embodiments, after the above processes, the pilot's operation score may be determined according to the operation offset. This operation score can be fed back to the pilot via the remote controller or the external device, so that the pilot can obtain his/her learning results. The operation score here is used to reflect the level of the pilot's control operation, and the specific form of the score is not limited as long as it is a form that can convey the control operation level to the pilot. For example, it can be a score displayed in real time for the pilot, such as a specific score out of a five-point scale, a ten-point scale, a one-hundred-point scale, etc., it can also be a grade, such as a specific grade under the ABC grade, or it can be reflected by color, such as being closer to red means greater error, and so on. Specifically, the operation score of the pilot is determined according to the operation offset, which may be a negative correlation between the operation score and the operation offset. That is, the greater the offset, the lower the score. The negative correlation here may be linear or non-linear, smooth or stepped, etc., which is no limited here.

In this embodiment, the teaching data is obtained, and the teaching data includes the standard trajectory of the stick. The actual operation state of the pilot's operation of the stick at the current moment is obtained. The operation offset is determined according to the standard operation state and the actual operation state at the current moment, and then the operation offset is fed back through the force feedback device. The pilot who learns the operation control can learn the difference between the actual operation state and the standard operation state through the operation offset fed back by the force feedback device, and learn the specific operations of the remote controller on the UAV. Compared with the method in which the pilot simulates the operation by watching instructional videos of operating the UAV, the teaching method of this disclosure can enable the pilot to intuitively learn the control method of the UAV, thereby improving the efficiency of learning the UAV flight control.

Several specific forms of the force feedback device are described in detail below.

FIG. 5A is a schematic structural diagram of a force feedback device of the present disclosure. As shown in FIG. 5A, the force feedback device includes torsion spring device 1 and torsion spring device 2. One end of torsion spring device 1 is connected to the X axis, and the other end of torsion spring device 1 is connected to the X-axis driving device. One end of torsion spring device 2 is connected to the Y-axis, and the other end of torsion spring device 2 is connected to the Y-axis driving device. Both the X-axis and Y-axis are connected to the stick, and the X-axis driving device and the Y-axis driving device are connected to a controller, which may be a processor, or a microprocessor.

The embodiment shown in FIG. 3A is explained with the device structure of this embodiment. The controller sends commands to the X-axis driving device and the Y-axis driving device to control the driving devices to drive the stick through the torsion spring devices to move according to a standard trajectory. The pilot can perceive the standard trajectory.

The embodiment shown in FIG. 4 is explained with the device structure of this embodiment. The controller sends commands to the X-axis driving device and the Y-axis driving device respectively to control the driving device so that one end of the torsion spring device moves in a standard operation state. The other end of the torsion spring device is controlled by the stick. That is, the pilot operates the stick. When the actual operation state of the pilot is the same as the standard operation state, the two ends of the torsion spring device have the same force and the torsion spring device does not have an elastic deformation. When the actual operation state of the pilot is different from the standard operation state, the two ends of the torsion spring device have different forces and the torsion spring device has an elastic deformation. When the torsion spring device returns to its original place, an operation offset is fed back.

In some embodiments, an angle sensor can also be provided at the lower end of the stick, and the angle sensor can obtain the actual operation state of the stick in real time. That is, the angle sensor can obtain the actual operation state of the stick in real time, and the angle sensor can send the obtained actual operation state to the processor, that is, the actual operation state is sent to the processor. The processor can determine the operation offset according to the standard operation state and the actual operation state at the current moment. The angle sensor can also be replaced with an inertial measurement unit (IMU).

In some embodiments, the driving device may be a steering gear.

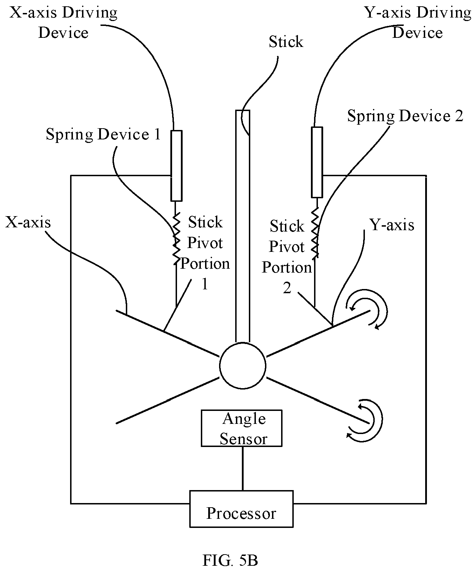

FIG. 5B is a schematic structural diagram of another force feedback device of the present disclosure. As shown in FIG. 5B, the force feedback device includes spring device 1, stick pivot portion 1, spring device 2 and stick pivot portion 2. Spring device 1 is connected to stick pivot portion 1, and spring device 2 is connected to stick pivot portion 2. The other end of spring device 1 is connected to the X-axis driving device, and stick pivot portion 1 is connected to the X axis. The other end of spring device 2 is connected to the Y-axis driving device, and stick pivot portion 2 is connected to the Y axis. The processor may be a processor, a microprocessor, or the like.

The embodiment shown in FIG. 3A is explained with the device structure of this embodiment. The controller sends commands to the X-axis driving device and the Y-axis driving device respectively to control the driving devices to drive the stick through the spring devices and the stick pivot portions to move in a standard operation state at various moments. Specifically, the driving device drives the stick pivot portion to rotate, and the stick pivot portion drives the stick to move through a force feedback device. The pilot can perceive the standard operation state.

The embodiment shown in FIG. 4 is explained with the device structure of this embodiment. The controller sends commands to the X-axis driving device and the Y-axis driving device respectively to control the driving device so that one end of the spring device moves in a standard operation state at various moments. The other end of the spring device is controlled by the stick. That is, the pilot operates the stick. When the actual operation state of the pilot is the same as the standard operation state, the two ends of the spring device have the same force and the spring device does not have an elastic deformation. When the actual operation state of the pilot is different from the standard operation state, the two ends of the spring device have different forces and the spring device has an elastic deformation. When the spring device returns to its original place, an operation offset is fed back.

In some embodiments, an angle sensor can also be provided at the lower end of the stick, and the angle sensor can obtain the actual operation state of the stick in real time. That is, the angle sensor can obtain the actual operation state of the stick in real time, and the angle sensor can send the obtained actual operation state to the processor, that is, the actual operation state is sent to the processor. The processor can determine the operation offset according to the standard operation state and the actual operation state at the current moment. The angle sensor can also be replaced with an IMU

In some embodiments, the driving device mentioned above may be a telescopic cylinder, and the spring device may be a tension spring.

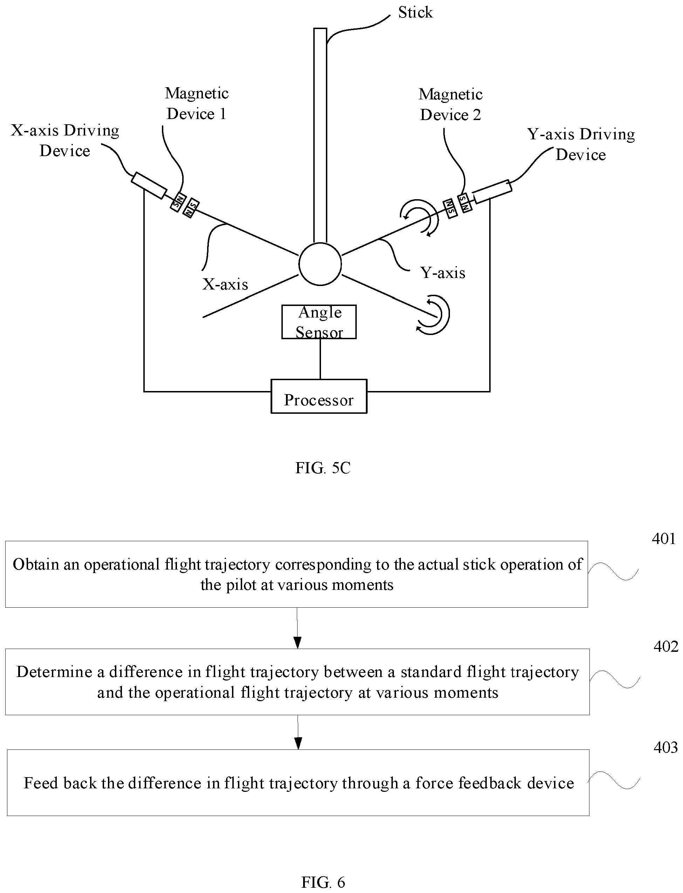

FIG. 5C is a schematic structural diagram of another force feedback device of the present disclosure. As shown in FIG. 5C, the force feedback device includes magnetic device 1 and magnetic device 2. One end of magnetic device 1 is connected to the X-axis, and the other end of magnetic device 1 is connected to the X-axis driving device. One end of magnetic device 2 is connected to the Y-axis, and the other end of magnetic device 2 is connected to the Y-axis driving device. Both the X-axis and Y-axis are connected to the stick, and the X-axis driving device and the Y-axis driving device are connected to a controller, which may be a processor, or a microprocessor.

The embodiment shown in FIG. 3A is explained with the device structure of this embodiment. The controller sends commands to the X-axis driving device and the Y-axis driving device respectively to control the driving devices to drive the stick through the magnetic devices to move in a standard operation state. The pilot can perceive the standard operation state.

The embodiment shown in FIG. 4 is explained with the device structure of this embodiment. The controller sends commands to the X-axis driving device and the Y-axis driving device respectively to control the driving device so that one end of the magnetic device moves in a standard operation state at various moments. The other end of the magnetic device is controlled by the stick. That is, the pilot operates the stick. When the actual operation state of the pilot is the same as the standard operation state, the two ends of the magnetic device have the same force and the magnetic device does not have a displacement. When the actual operation state of the pilot is different from the standard operation state, the two ends of the magnetic device have different forces and the magnetic device has a displacement. When the magnetic device returns to its original place, an operation offset is fed back.

In some embodiments, the magnetic device may be specifically arranged as shown in FIG. 5C, where two magnets are stacked. The N pole of one magnet is opposite to the S pole of the other magnet, and the S pole of one magnet is opposite to the N pole of the other magnet.

In some embodiments, an angle sensor can also be provided at the lower end of the stick, and the angle sensor can obtain the actual operation state of the stick in real time. That is, the angle sensor can obtain the actual operation state of the stick in real time, and the angle sensor can send the obtained actual operation state to the processor, that is, the actual operation state is sent to the processor. The processor can determine the operation offset according to the standard operation state and the actual operation state at the current moment. The angle sensor can also be replaced with an IMU

In some embodiments, the driving device may be a motor.

The force feedback device mentioned above may also be a piece of elastic rod and the elastic rod is made of an elastic material. Its implementation principle and effect are the same as those force feedback devices mentioned above, which is not repeated here. The specific structure of the force feedback device of the present disclosure is not limited to the above embodiments.

Only one stick connection is shown in FIGs. 5A-C for schematic description. The other stick of the remote controller may has the same connection structure, which is not repeated here.

In some other embodiments, the stick can also be provided at the rotor of an internal rotor motor to realize force feedback.

In some other embodiments, the force feedback device may not be provided at the stick of the remote controller in the manner described above, but a force feedback device may be provided inside the remote controller to provide force feedback for the entire remote controller. The pilot does not feel resistance when controlling the stick, but when the control error is too large, the remote controller will feed back to the pilot as a whole, for example, the remote controller will vibrate in proportion to the error.

FIG. 6 is a flowchart of another teaching method for a UAV according to the present disclosure. Based on the embodiment shown in FIG. 2, this embodiment can also feed back the flight trajectory difference through a force feedback device. As shown in FIG. 6, at 401, an operational flight trajectory corresponding to the actual stick operation of the pilot at various moments is obtained.

The operational flight trajectory specifically refers to a flight trajectory of the UAV corresponding to the operational trajectory of the pilot actually operating the stick.

At 402, a flight trajectory difference between a standard flight trajectory and the operational flight trajectory at various moments is determined, where the standard flight trajectory is a flight trajectory of the UAV corresponding to the standard trajectory of the stick. In one embodiment, the UAV is a simulated UAV and the simulated UAV is displayed on a display device, such as an external device, and etc.

At 403, the flight trajectory difference is fed back through the force feedback device.

In some embodiments, the pilot's operation score is determined according to the flight trajectory difference. When the difference in the flight trajectory is larger, the operation score decreases. When the difference in the flight trajectory is smaller, the operation score increases. A comprehensive evaluation of the flight trajectory difference throughout the learning process can give a comprehensive score for the pilot's learning.

In some embodiments, at least one of the operational flight trajectory or the standard flight trajectory is displayed on the display device, such as an external device.

The mechanism for determining the pilot's operation score can be implemented at an external device. For example, when the pilot watches the instructional video through an external device and simultaneously controls the remote controller to learn, he can open the corresponding instructional video in the corresponding instructional software, and the standard flight trajectory of the coach's UAV is displayed in the video. The pilot can control the remote controller to achieve the same flight trajectory. The external device can score the pilot's learning process by calculating the difference between the pilot's operational flight trajectory and the standard flight trajectory.

In addition, different weights can be given according to different flight conditions. For example, when it is a straight-line flight trajectory and the pilot has a certain control error, the trajectory of the pilot's UAV will deviate from the coach's straight-line flight trajectory. But because the straight-line flight trajectory is relatively simple and a certain deviation will not have a big impact on the overall flight, this control error can be given a lower weight. When it is a turning flight or other difficult flight trajectory, the pilot's control error makes the actual flight trajectory deviates a lot from the coach's flight trajectory and has a greater impact on the overall flight. Therefore, this control error can be given a higher weight. In addition, for the flight part with more difficulty to fly, when the pilot completes the flight of this part, a learning effect (such as good, perfect, etc.) during this period can be given in real time.

With the scoring mechanism, it not only can score the entire flight after a flight learning process ends, but also can score the pilot's flight in real time, that is, the real-time score can be displayed on the display interface (the display screen of the remote controller or an external device, such as the interface to watch the video on). The real-time score is calculated based on the error of the real-time flight trajectory.

In this embodiment, the operational flight trajectory corresponding to the actual stick operation of the pilot at various moments is obtained and the flight trajectory difference between the standard flight trajectory and the operational flight trajectory at various moments is obtained. Then the flight trajectory difference is fed back through the force feedback device. The pilot who learns the operation control can learn the difference between the operational flight trajectory and the standard flight trajectory through the flight trajectory difference fed back by the force feedback device, and learn the specific operations of the remote controller on the UAV. Compared with the method in which the pilot simulates the operation by watching instructional videos of operating the UAV, the teaching method of this disclosure can enable the pilot to intuitively learn the control method of the UAV, thereby improving the efficiency of learning the UAV flight control.

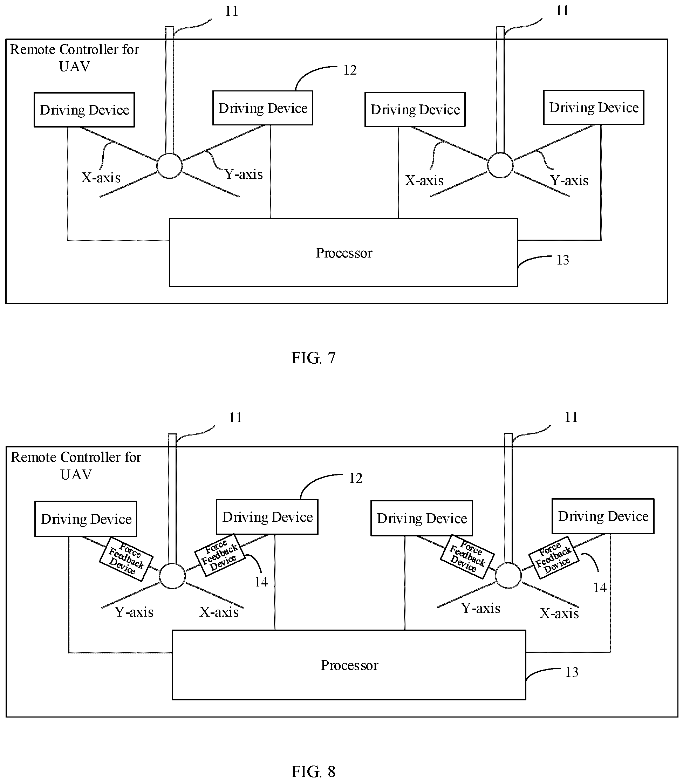

FIG. 7 is a schematic structural diagram of a remote controller for a UAV according to the present disclosure. As shown in FIG. 7, the device of this embodiment may include a stick 11, a driving device 12, and a processor 13.

One end of the driving device 12 is connected to the stick 11, and the other end of the driving device 12 is connected to the processor 13. The processor 13 is configured to obtain teaching data, and the teaching data includes a standard trajectory of the stick. The processor 13 is also configured to control the driving device to drive the stick to move according to the standard trajectory.

In some embodiments, the standard trajectory includes a standard operation state of the stick at various moments.

In some embodiments, the standard operation state includes at least one of a standard stroke amount or a standard direction.

In some embodiments, the processor 13 is configured to control the stick through the driving device to move according to the standard operation state of the stick at various moments.

The device of this embodiment may be used to execute the technical solutions of the above embodiments. The implementation principles and technical results are similar and are not repeated here.

FIG. 8 is a schematic structural diagram of another remote controller for a UAV according to the present disclosure. As shown in FIG. 8, the device of this embodiment, based on the structure of the device shown in FIG. 8, further includes a force feedback device 14. The force feedback device 14 is used to provide a feedback force when the driving device drives the stick to move.

In some embodiments, the force feedback device 14 is coupled between the stick 11 and the driving device 12. The driving device 12 drives the stick 11 to move through the force feedback device 14.

In some embodiments, the force feedback device 14 is coupled between the stick and a stick pivot portion. The driving device drives the stick pivot portion to rotate, and the stick pivot portion drives the stick to move through the force feedback device.

In some embodiments, the force feedback device 14 is a torsion spring device.

In some embodiments, the force feedback device 14 is a spring device.

In some embodiments, the force feedback device 14 is a magnetic device.

In some embodiments, the force feedback device 14 is a piece of elastic rod, and the elastic rod is made of an elastic material.

In some embodiments, the processor is configured to obtain an actual operation trajectory of the current stick operation of the pilot, determine an operation offset according to the standard operation state and the actual operation state at the current moment, and feed back the operation offset through the force feedback device.

In some embodiments, the processor 13 is configured to feed back the operation offset through the force feedback device when the operation offset is greater than a preset threshold.

In some embodiments, the processor 13 is configured to record the operation offset when the operation offset is greater than a preset threshold.

In some embodiments, the processor 13 is further configured to determine a pilot's operation score according to the operation offset.

In some embodiments, the force feedback device 14 is further coupled between the stick and the driving device. The processor 13 is configured to obtain the operational flight trajectory corresponding to the actual stick operation of the pilot at various moments, determine a flight trajectory difference between the standard flight trajectory and the operational flight trajectory at various moments, where the standard flight trajectory is the flight trajectory of the UAV corresponding to the standard trajectory of the stick, and feed back the flight trajectory difference through the force feedback device 14.

In some embodiments, the processor 13 is further configured to determine a pilot's operation score according to the flight trajectory difference.

In some embodiments, the UAV is a simulated UAV and the simulated UAV is displayed on a display device.

In some embodiments, at least one of the operational flight trajectory or the standard flight trajectory is displayed on the display device.

In some embodiments, the teaching data is generated by a coach controlling a teaching remote controller.

In some embodiments, the teaching data is obtained by processing the recorded video with visual analysis, wherein the recorded video is a video of the actual operations of the coach controlling the teaching remote controller.

In some embodiments, the visual analysis includes a three-dimensional modeling algorithm based on binocular stereo vision.

The device of this embodiment may be used to execute the technical solutions of the above embodiments. The implementation principles and technical results are similar and are not repeated here.

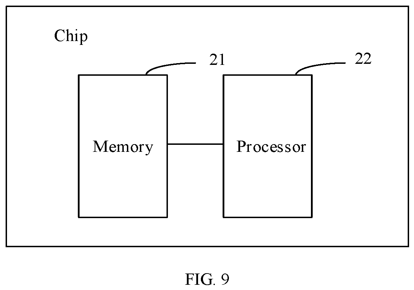

FIF. 9 is a schematic structural diagram of a chip of the present disclosure. As shown in FIG. 9, the chip of this embodiment may be used as a chip of a remote controller or an external device. The chip of this embodiment may include a memory 21 and a processor 22. The memory 21 is communicatively connected to the processor 22.

The memory 21 is configured to store program instructions, and the processor 22 is configured to call the program instructions in the memory 21 to execute the above solutions.

The chip of this embodiment may be used to execute the technical solutions of the above embodiments, and has similar implementation principles and technical results, which are not repeated here.

In some embodiments, the above program instructions may be implemented in the form of functional units of software and can be sold or used as stand-alone products. The memory 21 may be any form of computer-readable storage media. All or part of the technical solutions of the present disclosure can be realized in the form of software products, including some instructions to make a computer device, specifically a processor 22, to execute all or part of the processes of each embodiment of the present disclosure. The computer-readable storage media include various media that can store program codes, such as a U disk, a portable hard disk, a read-only memory (ROM), a random-access memory (RAM), a magnetic disk, or an optical disk.

The division of the modules in the embodiments of the present disclosure is schematic and is only a division of logical functions. In actual implementation, there may be other division manners. The functional modules in the embodiments of the present disclosure may be integrated into one processing module, or each module may exist alone physically, or two or more modules may be integrated into one module. The above integrated modules may be implemented in the form of hardware or software function modules.

If the integrated module is implemented in the form of a software function module and sold or used as a stand-alone product, it may be stored in a computer-readable storage medium. All or part of the technical solution of the present disclosure, or part of the contribution to the existing technology, can be embodied in the form of a software product. The computer software product is stored in a storage medium and includes several instructions to enable a computer device (which may be a personal computer, a server, or a network device, etc.) or a processor to perform all or part of the steps of the methods described in various embodiments of the present disclosure. The foregoing storage media include various media that can store program codes, such as a U disk, a portable hard disk, a ROM, a RAM, a magnetic disk, or an optical disk.

The above embodiments can be implemented in whole or in part by software, hardware, firmware, or any combination thereof. When implemented using software, it can be implemented in whole or in part in the form of a computer program product. The computer program product includes one or more computer instructions. When the computer program instructions are loaded and executed on the computer, all or part of the processes or functions according to the embodiments of the present disclosure are generated. The computer may be a general-purpose computer, a special-purpose computer, a computer network, or other programmable devices. The computer instructions may be stored in a computer-readable storage medium or transferred from one computer-readable storage medium to another computer-readable storage medium. For example, the computer instructions may be transferred from a website, computer, server or data center to another website, computer, server or data center via wire (such as coaxial cable, optical fiber, digital subscriber line (DSL)) or wireless (such as infrared, wireless, microwave, etc.). The computer-readable storage medium may be any available medium that can be accessed by a computer or a data storage device including an integrated server, data center with one or more available media. The available medium may be a magnetic medium (for example, a floppy disk, a hard disk, a magnetic tape), an optical medium (for example, a DVD), or a semiconductor medium (for example, a solid-state disk (SSD)).

Those skilled in the art can clearly understand that, for the convenience and conciseness of description, only the above division of each function module is used as an example for illustration. In real applications, the above functions can be allocated to different function modules according to needs, that is, the internal structure of the device is divided into different function modules to complete all or part of the functions described above. For the specific working process of the device described above, reference may be made to the corresponding process in the foregoing embodiments, and details are not repeated here.

The above embodiments are only used to illustrate the technical solution of the present disclosure, rather than limiting it. Although the present disclosure has been described in detail with reference to the foregoing embodiments, those of ordinary skills in the art should understand that the technical solutions described in the foregoing embodiments can still be modified, or some or all of the technical features can be equivalently replaced, and these modifications or replacements do not fall out of the scope of the corresponding technical solutions of the embodiments of the present disclosure.

## Claims

1. A teaching method for an unmanned aerial vehicle (UAV) comprising:
obtaining teaching data, wherein the teaching data includes a standard trajectory of a stick and the stick is provided at a remote controller;
controlling a driving device to drive the stick to move according to the standard trajectory, wherein the driving device is connected to the stick to control the stick to move.

2. The method of claim 1, wherein the standard trajectory includes a standard operation state of the stick at various moments.

3. The method of claim 2, wherein the standard operation state includes at least one of a standard stroke amount or a standard direction.

4. The method of claim 2, wherein controlling the driving device to drive the stick to move according to the standard trajectory includes controlling the stick through the driving device to move according to the standard operation state of the stick at various moments.

5. The method of claim 1, wherein the remote controller further includes a force feedback device, when the driving device drives the stick to move, the force feedback device provides a feedback force.

6. The method of claim 5, wherein the force feedback device is coupled between the stick and the driving device, and the driving device drives the stick to move through the force feedback device.

7. The method of claim 5, wherein the force feedback device is coupled between the stick and a stick pivot portion, the driving device drives the stick pivot portion to rotate, and the stick pivot portion drives the stick to move through the force feedback device.

8. The method of claim 6 or 7, wherein the force feedback device is a torsion spring device.

9. The method of claim 6 or 7, wherein the force feedback device is a spring device.

10. The method of claim 6 or 7, wherein the force feedback device is a magnetic device.

11. The method of claim 6 or 7, wherein the force feedback device is a piece of elastic rod, and the elastic rod is made of an elastic material.

12. The method of claim 5, wherein controlling the movement of the stick through the driving device according to the standard trajectory includes:
obtaining an actual operation state of an operation of the stick by a pilot at a current moment;
determining an operation offset according to a standard operation state and the actual operation state at the current moment;
feeding back the operation offset through the force feedback device.

13. The method of claim 12, wherein feeding back the operation offset through the force feedback device includes feeding back the operation offset through the force feedback device when the operation offset is greater than a preset threshold.

14. The method of claim 12, wherein feeding back the operation offset through the force feedback device includes recording the operation offset when the operation offset is greater than a preset threshold.

15. The method of claim 12 further comprising:
determining an operation score of the pilot according to the operation offset.

16. The method of claim 1, wherein a force feedback device is coupled between the stick and the driving device, the method further comprising:
obtaining an operational flight trajectory corresponding to actual stick operations by a pilot at various moments;
determining a flight trajectory difference between a standard flight trajectory and the operational flight trajectory at various moments, wherein the standard flight trajectory is a flight trajectory of the UAV corresponding to the standard trajectory of the stick;
feeding back the flight trajectory difference through the force feedback device.

17. The method of claim 16, further comprising:
determining an operation score of the pilot according to the flight trajectory difference.

18. The method of claim 16, wherein the UAV is a simulated UAV and the simulated UAV is displayed on a display device.

19. The method of claim 16, wherein at least one of the operational flight trajectory or the standard flight trajectory is displayed on the display device.

20. The method of any one of claims 1-19, wherein the teaching data is generated by a coach controlling a teaching remote controller.

21. The method of any one of claims 1-19, wherein the teaching data is obtained by processing a recorded video with visual analysis, and the recorded video is a video of actual operations by a coach controlling a teaching remote controller.

22. The method of claim 21, wherein the visual analysis includes a three-dimensional modeling algorithm based on binocular stereo vision.

23. A remote controller for an unmanned aerial vehicle (UAV) comprising a stick, a driving device and a processer, wherein one end of the driving device is connected to the stick, and another end of the driving device is connected to the processor, the processor being configured to:
obtain teaching data that includes a standard trajectory of the stick;
control the driving device to drive the stick to move according to the standard trajectory.

24. The remote controller of claim 23, wherein the standard trajectory includes a standard operation state of the stick at various moments.

25. The remote controller of claim 24, wherein the standard operation state includes at least one of a standard stroke amount or a standard direction.

26. The remote controller of claim 24, wherein the processor is configured to control the stick through the driving device to move according to the standard operation state of the stick at various moments.

27. The remote controller of claim 23, further comprising:
a force feedback device, wherein the force feedback device provides a feedback force when the driving device drives the stick to move.

28. The remote controller of claim 27, wherein the force feedback device is coupled between the stick and the driving device and the driving device drives the stick to move through the force feedback device.

29. The remote controller of claim 27, wherein the force feedback device is coupled between the stick and a stick pivot portion, the driving device drives the stick pivot portion to rotate, and the stick pivot portion drives the stick to move through the force feedback device.

30. The remote controller of claim 28 or 29, wherein the force feedback device is a torsion spring device.

31. The remote controller of claim 28 or 29, wherein the force feedback device is a spring device.

32. The remote controller of claim 28 or 29, wherein the force feedback device is a magnetic device.

33. The remote controller of claim 28 or 29, wherein the force feedback device is a piece of elastic rod, and the elastic rod is made of an elastic material.

34. The remote controller of claim 27, wherein the processor is configured to:
obtain an actual operation state of an operation of the stick by a pilot at a current moment;
determine an operation offset according to a standard operation state and the actual operation state at the current moment;
feed back the operation offset through the force feedback device.

35. The remote controller of claim 34, wherein the processor is configured to feed back the operation offset through the force feedback device when the operation offset is greater than a preset threshold.

36. The remote controller of claim 34, wherein the processor is configured to record the operation offset when the operation offset is greater than a preset threshold.

37. The remote controller of claim 34, wherein the processor is configured to determine an operation score of the pilot according to the operation offset.

38. The remote controller of claim 23, wherein a force feedback device is coupled between the stick and the driving device, the processor is configured to:
obtain an operational flight trajectory corresponding to actual stick operations by a pilot at various moments;
determine a flight trajectory difference between a standard flight trajectory and the operational flight trajectory at various moments, wherein the standard flight trajectory is a flight trajectory of the UAV corresponding to the standard trajectory of the stick;
feed back the flight trajectory difference through the force feedback device.

39. The remote controller of claim 38, wherein the processor is further configured to determine an operation score of the pilot according to the flight trajectory difference.

40. The remote controller of claim 38, wherein the UAV is a simulated UAV and the simulated UAV is displayed on a display device.

41. The remote controller of claim 38, wherein at least one of the operational flight trajectory or the standard flight trajectory is displayed on the display device.

42. The remote controller of any one of claims 23-41, wherein the teaching data is generated by a coach controlling a teaching remote controller.

43. The remote controller of any one of claims 23-42, wherein the teaching data is obtained by processing a recorded video with visual analysis, and the recorded video is a video of actual operations by a coach controlling a teaching remote controller.

44. The remote controller of claim 43, wherein the visual analysis includes a three-dimensional modeling algorithm based on binocular stereo vision.

45. A computer storage medium storing a computer program or instructions, wherein the computer program or instructions are executed by a processor or a computer to implement the teaching method for the UAV of any one of claims 1-22.
